# EUROPEAN PATENT SPECIFICATION

(11) **EP 3 391 488 B1**
(45) Date of publication and mention of the grant of the patent: **18.03.2020**
(21) Application number: 16829120.1
(22) Date of filing: 15.12.2016
(51) Int. Cl.: H02G 5/10, H02G 3/03, H02G 5/00

(54) **BUSBAR**
STROMSCHIENE
BARRE OMNIBUS

(30) Priority: 16.12.2015 IT UB20159292
(43) Date of publication of application: 24.10.2018
(73) Proprietor: Bticino S.p.A., 21100 Varese (IT)
(72) Inventor: FABRIZI, Fabrizio, 24100 Bergamo (BG) (IT)
(74) Representative: Perani & Partners S.p.A.
(86) International application number: PCT/IB2016/057664
(87) International publication number: WO 2017/103844

(56) References cited:
- EP-A1- 1 120 877
- CN-Y- 201 122 823
- CN-Y- 201 374 534
- DE-A1-102010 014 005
- JP-A- 2009 060 757
- JP-U- S 544 400
- JP-U- S5 793 038

## Description

### Field of the invention

The present invention concerns a busbar.

Particularly, the present invention relates to a thermally efficient busbar.

### Discussion of the related art

The provision of busbar conductors for power distribution is known in the art.

Busbars are used for power distribution in industrial or service-sector buildings, in which significant load currents are designed to be carried, e.g. from a few hundreds to a few thousands of Amperes. Such high currents require conductors with large section surfaces to decrease conductor resistance. The advantage achieved by reducing conductor resistance consists in reduced voltage drop and Joule effect losses. Joule effect losses cause undesired heating of conductors, exposing conductors and structures in contact therewith to fire and damage risks. Conductor heating also causes a further increase of their electric resistance, which will worsen the above described hazards.

Busbars have clamping means for holding all the busbar elements close together with an appropriate contact pressure to provide the structural rigidity required to maintain the conductors in their seats even under high forces, such as in case of short-circuit.

Namely, in double busbars, the two groups of busbar conductors are contained in an enclosure and are separated by a spacer located within the enclosure. The clamping means firmly retain the busbar conductors within the enclosure.

It shall be noted that busbar conductor manufacturers produce conductor segments of preset lengths, in order to provide easily handleable conductors, adapted to be installed in different types of buildings.

As mentioned above, the particular bar shape allows a more efficient utilization of the conducting material in use. Furthermore, the bar shape may be efficient in dissipation of the heat generated by Joule effect. Therefore, when an electric load is applied to a busbar as described above, the temperature of the busbar considerably increases. In order to dissipate the heat generated by the conductors within a single busbar, certain enclosures are known in the art to be equipped with heat dissipation elements, such as wings disposed outside the enclosure. One example of a single busbar having a finned enclosure is disclosed in document CN 204290218 U. More in detail, the wings are formed of one piece with the enclosure that houses the busbar conductors. CN 204258225 U also discloses a single busbar having a plurality of heat-dissipating wings, which form an integral part of the busbar enclosure.

Other examples of busbar are disclosed in documents JP 2009060757, which discloses the preamble of claim 1, CN 201374534 and JP S5793038 U.

### Prior art problem

The busbars as disclosed in prior art documents CN 204258225 U and CN 204290218 U have a plurality of wings which do not ensure efficient dissipation of the heat generated by the bars, because the wings cannot directly act upon the enclosure of the busbar, as they are themselves part of the enclosure. In this respect, the Applicant realized that it would be desirable to provide a busbar that is more efficient in dissipating the heat generated by busbar conductors, especially in double busbars.

Furthermore, in case of short-circuit, the finned enclosures as disclosed in documents CN 204258225 U and CN 204290218 U are highly stressed due to the repulsion forces generated between the bars. In this condition, the enclosures will be deformed and be at risk of reaching a breaking point. Furthermore, in a short-circuit condition the bars will tend to overheat and this, in addition to the deformation of the finned enclosure, will further affect the poor dissipation capacity of the wings. In the prior art, busbar conductors are taped, e.g. wrapped in insulating tape, to attenuate the above problems of repelling bars and the resulting deformation of the enclosure in case of short-circuit.

### SUMMARY OF THE INVENTION

The object of the present invention is to provide a busbar that is more efficient in dissipating heat as compared with prior art busbars.

A further object of the present invention is to provide a double busbar that has improved strength and reliability, especially in case of a short-circuit.

The aforementioned technical purpose and objects are substantially fulfilled by a busbar that comprises the technical features as disclosed in one or more of the accompanying claims.

### Advantages of the invention

One embodiment can provide a busbar that ensures improved dissipation of the heat generated by busbar conductors within the enclosure.

One embodiment can provide a busbar that will more firmly retain busbar conductors within the enclosure, especially in case of short-circuit.

One embodiment can provide a busbar that will ensure improved packing of bars, resulting in a more efficient heat exchange. Furthermore, taping of busbar |conductors may be avoided.

### BRIEF DESCRIPTION OF THE DRA WINGS

The characteristics and advantages of the present invention will appear from the following detailed description of a possible practical embodiment, illustrated as a nonlimiting example in the set of drawings, in which:
- Figure 1 is a view of a busbar of the present invention,
- Figure 2 shows a perspective view of a portion of the busbar of Figure 1,
- Figure 3 shows a side view of the busbar portion of Figure 2,
- Figure 4 shows a cross-sectional view of the busbar portion of Figure 2,
- Figure 5 is a view of a further busbar of the present invention,
- Figure 6 shows a perspective view of a portion of the busbar of Figure 5.

The busbar as shown in the accompanying figures shall be deemed to be schematically illustrated, not necessarily drawn to scale, and not necessarily representing the actual proportions of its parts.

### DETAILED DESCRIPTION

Even when this is not expressly stated, the individual features as described with reference to the particular embodiments shall be intended as auxiliary to and/or interchangeable with other features described with reference to other exemplary embodiments.

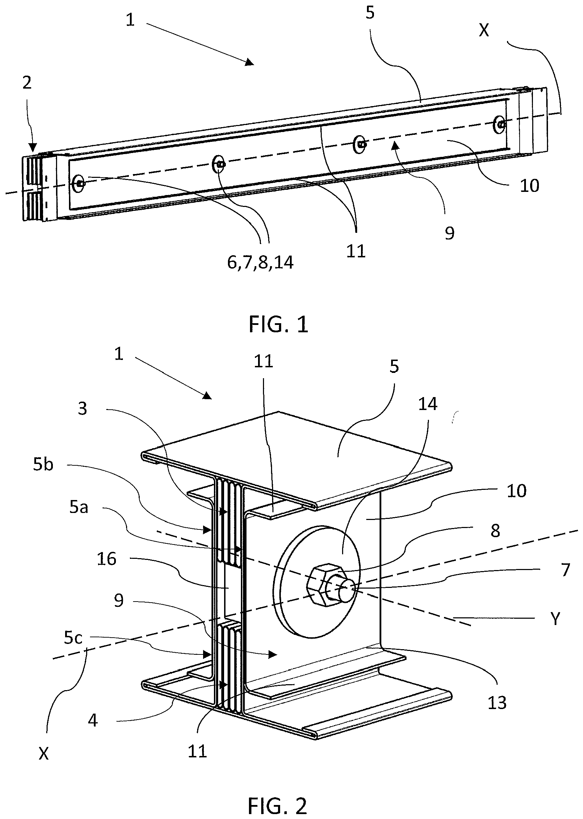

Referring to Figure 1, numeral 1 designates a busbar of the present invention. In the preferred embodiment of the present invention, the busbar 1 is a double busbar.

The busbar 1 comprises a plurality of busbar conductors 2. In other words, the busbar comprises multiple bar-shaped conductors in parallel arrangement. The busbar conductors 2 are separate and insulated from each other. The number of busbar conductors 20 of a busbar 1 may change according to the power distribution system in use. According to a preferred embodiment in which the busbar 1 is of the double busbar type, the plurality of busbar conductors 2 comprise a plurality of first conductors 3 and a plurality of second conductors 4. Preferably, in a three-phase power distribution system with a neutral and double busbars, the busbar comprises three pairs of phase conductors and one pair of neutral conductors. This means that the plurality of first conductors 3 comprises three phase conductors and one neutral, and the plurality of second conductors 4 also comprises three phase conductors and one neutral. It shall be noted that the busbar conductors 3, 4 have a predominantly longitudinal extent, along the longitudinal direction X, and are parallel to one another.

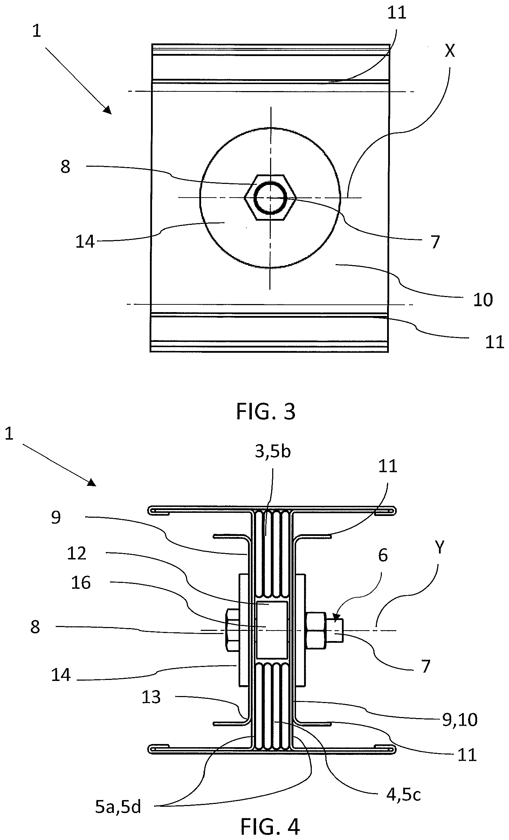

Reference will be made below, for simplicity, to an exemplary embodiment concerning the particular case of a double busbar 1 (Figures 1 to 6).

The busbar 1 comprises an outer enclosure 5 containing the plurality of busbar conductors 2. The enclosure 5 has an inner cavity in which the busbar conductors 2 are accommodated. According to a preferred embodiment of the present invention, the enclosure 5 mainly extends in a longitudinal direction X to a preset length value. Preferably, the enclosure 5 has the form of a tubular conduit, with a cylindrical or polygonal profile, formed of one piece or of multiple joinable parts. Preferably, the enclosure 5 comprises a flat outer wall 5a. More preferably, the enclosure has at least two opposite flats walls 5a. Therefore, the enclosure 5 extends in a longitudinal direction and is configured to contain a plurality of busbar conductors 2, and particularly the plurality of first and second conductors 3, 4, which also extend parallel to one another in the longitudinal direction X along which they develop.

The busbar 1 comprises clamping means 6 that extend through the enclosure 5 to hold the plurality of busbar conductors 2 and hence the pluralities of the first and second conductors 3, 4 within the enclosure 5. According to a preferred embodiment, the clamping means 6 extend across the section of the enclosure 5 at least in one transverse direction Y, which is orthogonal to the direction of longitudinal extent X. Preferably, the clamping means 6 comprise a through element 7 which extends through the enclosure 5, and an end element 8 connected at one end of the through element 7, to fix and hold the busbar conductors 3, 4 within the enclosure 5. More preferably, each clamping means 6 comprises a through element 7 which extends between two ends, and two end elements 8 which are connected at the two ends of the through element 7 respectively. The two ends of the through element 7 and the two end elements 8 are placed outside the enclosure 5. For example, according to the preferred embodiment, the through element 7 is an externally threaded screw, whereas a first end element 8 is an internally threaded nut which is screwed upon a first end of the through element 7, and the second end element 8 is also embodied by a nut, or alternatively by the screw head. In other words, the through element 7 extends through the entire section of the enclosure 5, whereas its two ends are placed outside the enclosure 5 for connection to their respective end elements 8. In this embodiment, the clamping means 6 comprise a bolt, having a through element 7 in the form of an externally threaded screw, and an end element 8 in the form of an internally threaded nut to be screwed upon the screw.

The busbar 1 comprises at least one heat dissipation element in the form of a U-shaped plate, comprising a base 10 and two side wings 11 projecting from the base 10. The heat dissipation element 9 is fixed to the exterior of the enclosure 5 by the clamping means 6 such that the base 10 contacts the enclosure 5 and the two side wings 11 extend away from the enclosure 5.

According to a preferred arrangement, the base 10 is configured as a flat plate defining its plane of extension. Preferably, the base 10 is configured to adhere to the flat outer wall 5a of the enclosure 5. In other words, in the preferred embodiment the base 10 of the heat dissipation element 9 is configured as a flat plate, preferably free of any elevations or depressions. Thus, the base 10 tightly adheres against the flat outer wall 5a of the enclosure 5. Preferably, the base 10 has a through hole 12 configured to receive a respective through element 7. Obviously, the term flat base 10 is intended to mean that the plate seamlessly extends on its plane of extension, with the exception of the area in which the through hole 7 is formed.

According to a preferred embodiment of the invention, the two side wings 11 are orthogonal to the plane of extension of the base 10. This mean that the two side wings 11 are located at the two opposite sides of the base 10, from which they project along a direction perpendicular to the plane of extension of the base 10. Preferably, the two side wings 11 are configured as flat plates which mainly extend in the longitudinal direction X and, as mentioned above, lie on their own plane of extension orthogonal to the plane of extension of the base 10. According to an alternative arrangement, the two side wings 11 are inclined to the base 10 by an angle preferably ranging from 80° to 100°.

According to a further preferred embodiment of the invention, the heat dissipation element 9 comprises two connecting portions 13 having a substantially curved profile. The two connecting portions 13 are respectively configured to connect the base 10 with the two side wings 11. In other words, the base 10 is not directly connected to the two side wings 11 at right angles, e.g. By forming a corner, but through a connecting portion 13 interposed as a connection between the base 10 and its respective side fin 11. As a result, the base 10 is connected with each side fin 11 through a curved, seamless portion, which is configured as a curved plate adapted to connect together two flat plates, i.e. the base 10 and the side fin 11 inclined to each other at an angle of 90°.

According to a further preferred embodiment, which is compatible with those listed above, each end element 8 of the clamping means 6 may comprise a respective washer 14 abutting between the end element 8 and the flat outer surface of the enclosure 5. Preferably, the washer 14 is configured as a disk spring which is adapted to increase the grip of the clamping means 6 on the enclosure 5 and the base 10 of the heat dissipation element 9. Particularly, the disk spring is adapted to oppose the loosening of the through element 7 (e.g. screw).

According to a preferred embodiment of the invention, the heat dissipation element 9 comprises a plurality of intermediate wings 15 projecting out of the base 10 away from the enclosure 5. Preferably, the intermediate wings 15 are evenly distributed (e.g. parallel and equally spaced wings), on the base 10 in the space between the two side wings 11. Preferably, the intermediate wings 15 are orthogonal to the base 10. More preferably, the intermediate wings are designed as a bundle of plates parallel to the side wings 11. It shall be noted that the plurality of intermediate wings 15 do not occupy the areas of the base 10 in which a through hole 12 is formed, or in which the end elements 8 (e.g. nuts or washers 14) of the clamping means 6 are provided.

According to the invention, the through element 7 extends through the heat dissipation element 9, i.e. through both the an entire section of the enclosure 5 and the heat dissipation element 9 which contacts a portion of the enclosure 5. Preferably, the end element 8 of the clamping means 6 is mechanically connected to one end of the through element 7 for firm fixation of the heat dissipation element 9 to the enclosure 5. The base 10 of the heat dissipation element 9 is located between said the element 8 and the enclosure 5. Thus, the heat dissipation element 9 is held in contact with the enclosure 5 by application of pressure by the clamping means 6, 8 for perfect adhesion to the flat outer wall 5a of the enclosure 5. It shall be noted that the possible provision of a washer 14 coupled to the end element 8 of the clamping means 6 promotes a more even distribution of forces, and hence of the contact pressure between the heat dissipation element 9 and the enclosure 5. Advantageously, the heat dissipation element 9 facilitates dissipation of the heat generated by the busbar conductors 2 contained within the enclosure 5 toward the outside environment due to the perfect contact between the base 10 and the underlying portion of the enclosure 5, and especially due to the provision of the side wings 11 and possibly of the intermediate wings 15. It should be further noted that, in the preferred embodiment the base 10 is flat, and the portion of the enclosure 5 in contact therewith is also flat, to facilitate both heat exchange and a more even distribution of forces. The even distribution of forces in turn increases the clamping effect of the heat dissipation element 9 on the enclosure 5 and hence of the enclosure 5 on the busbar conductors 3, 4. This will prevent the deformation of the enclosure 5 and allows room for movement of the busbar conductors 2 especially in case of short-circuit. Furthermore, in the preferred embodiment in which two dissipation devices 9 are fixed to two opposite sides 5d of the enclosure 5 by the same clamping means 6, a more even and transverse clamping effect is obtained on the enclosure 5, as well as improved dissipation of the heat of the busbar 1.

According to the invention, the busbar 1 is of the double busbar type and comprises a spacer element 16 placed within the enclosure 5 to identify an upper cavity 5d and a lower cavity 5c of the enclosure 5. The spacer element 16 extends along the longitudinal direction X to the preset length value of the enclosure, to define the two separate inner cavities 5b, 5c of the enclosure 5. Preferably, the spacer element 16 divides the inner cavity of the enclosure 5 in such a manner that the upper cavity 5b and the lower cavity 5c will have the same size and be arranged one above the other. The plurality of the first conductors 3 is housed in the upper cavity 5b and the plurality of second conductors 4 is housed in the lower cavity 5c. The through element 7 extends through the enclosure 5 and the spacer element 16 transverse to the longitudinal direction X, preferably perpendicular to the flat outer wall 5a and the heat dissipation element 9. The through element 7 extends through the inner cavity of the enclosure 5 at the spacer element 16, to avoid any interference with the arrangement and operation of the busbar conductors 2 and hence with electric current conduction through the busbar conductors 2.

According to a further preferred embodiment, the busbar 1 comprises two heat dissipation elements 9 arranged at the two opposite sides 5d of the enclosure 5 respectively. Preferably, the two opposite sides 5d are formed as two flat outer walls 5a, at least in the area at which they contact their respective heat dissipation elements 9.

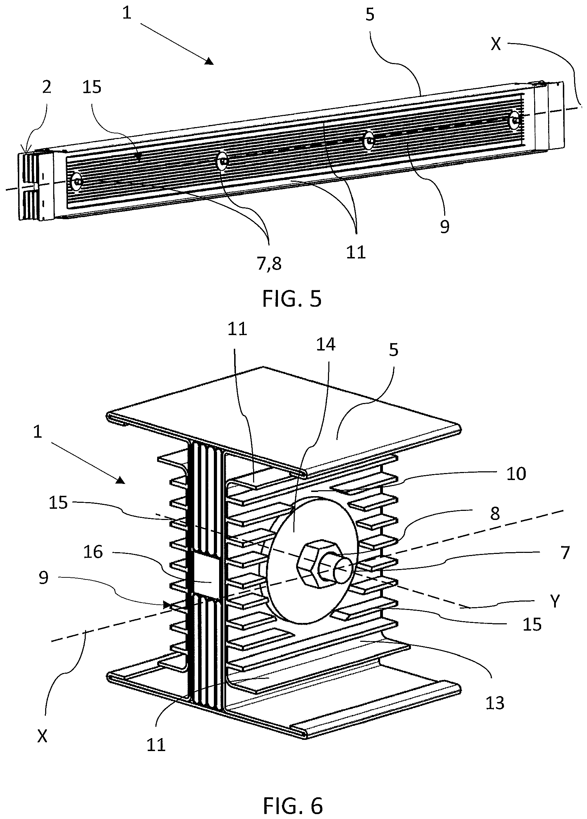

According to a preferred arrangement of the present invention, each heat dissipation element 9 extends longitudinally to a preset length of the enclosure 5, to adhere to the flat outer wall 5a all along the enclosure 5. Furthermore, the busbar comprises a plurality of clamping means 6 arranged over the enclosure 5 along the longitudinal direction X Preferably, the plurality of clamping means 6 is evenly distributed all along the enclosure 5 to ensure perfect adhesion of the heat dissipation element 9 on the flat outer wall 5a of the enclosure 5 (see Figures 1 and 5).

Therefore, the present invention can provide a busbar in which a heat dissipation element is interposed between the enclosure and the clamping bolt. The heat dissipation element affords greater compaction of bars within the enclosure, longitudinal and transverse distribution of forces all along the enclosure, and greater heat dissipation due to the provision of the side wings projecting out of the base of the heat dissipation element, and the additional intermediate wings, if any. Particularly, the heat dissipation element helps to hold the bars closely packed in case of short-circuit, and avoids the need of taping them (e.g. wrapping them in insulating tape).

A particular advantage deriving from the use of the heat dissipation element 9 in a busbar is that the dissipator presses upon the busbar conductors even at a certain distance from the bolt that extends through the enclosure. Thus, the heat dissipation element has a key role in ensuring that the busbar conductors are maintained closely packed. Indeed, the more the busbar conductors are closely packed, the higher the heat exchange and the efficiency of the busbar. Furthermore, the particular U shape of the heat dissipation element ensures greater stiffness of the heat dissipation element and improves distribution of forces over the wall of the enclosure. As mentioned above, the side wings improve heat exchange and facilitate dissipation of the heat generated by busbar conductors.

Those skilled in the art will obviously be able to make a number of changes to the above discussed variants to fulfill particular requirements, such as the use of a different inclination of the side wings 11 and the intermediate wings 15 (if any) to the base 10, without departure from the scope of the invention, as defined in the following claims.

## Claims

1. A busbar (1) comprising:
- a plurality of busbar conductors (2);
- an outer enclosure (5) containing said plurality of busbar conductors (2),
- clamping means (6) extending through said enclosure (5) for holding said plurality of busbar conductors (2) within said enclosure (5), - a U-shaped heat dissipation element (9), comprising a base (10) and two side wings (11) projecting from said base (10),
wherein said clamping means (6) comprise a through element (7), extending through said heat dissipation element (9) and said enclosure (5), and an end element (8) attached at one end of said through element (7) to fix said heat dissipation element (9) to said enclosure (5),
**characterized in that it comprises:**
- a spacer element (16) located inside said enclosure (5) to define an upper cavity (5b) and a lower cavity (5c) of said enclosure (5),
**and in that**
- said heat dissipation element (9) is fixed outside said enclosure (5) by said clamping means (6) such that said base (10) contacts said enclosure (5) and said two side wings (11) extend away from said enclosure (5),
- said base (10) of said heat dissipation element (9) is located between said end element (8) and said enclosure (5),
- said plurality of busbar connectors (2) comprises a plurality of first conductors (3) housed in said upper cavity (5b) and a plurality of second conductors (4) housed in said lower cavity (5c),
- said through element (7) extends through said spacer element (16).

2. A busbar (1) as claimed in claim 1, wherein:
- said enclosure (5) comprises a flat outer wall (5a),
- said base (10) is formed as a flat plate and adheres to said flat outer wall (5a) of said enclosure (5).

3. A busbar (1) as claimed in claim 2, wherein:
- said two side wings (11) are orthogonal to the base (10).

4. A busbar (1) as claimed in any of the preceding claims wherein:
- said heat dissipation element (9) comprises two connecting portions (13) having a curved profile, for connecting said base (10) with said two side wings (11).

5. A busbar (1) as claimed in any of the preceding claims wherein:
- said heat dissipation element (9) comprises a plurality of intermediate wings (15) projecting from said base (10) away from said enclosure (5) and arranged over said base (10) between said two side wings (11).

6. A busbar (1) as claimed in any of the preceding claims, wherein:
- said base (10) has a through hole (12) configured to receive said through element (7).

7. A busbar (1) as claimed in any of the preceding claims comprising:
- two heat dissipation elements (9) located at two opposite sides (5d) of said enclosure (5) respectively.

8. A busbar (1) as claimed in any of the preceding claims wherein:
- said enclosure (5) mainly extends in a longitudinal direction (X) to a preset length value,
- each heat dissipation element (9) longitudinally extends to said preset length value of said enclosure (5),
- said busbar comprises a plurality of clamping means (6) arranged over said enclosure (5) along said longitudinal direction (X).

## Patentansprüche

1. Eine Sammelschiene (1) umfassend:
- eine Vielzahl von Sammelschienenleitern (2);
- eine die Vielzahl von Sammelschienenleitern (2) beinhaltende äußere Umhüllung (5),
- Spannmittel (6), die sich längs der Umhüllung (5) erstrecken, um die Vielzahl von Sammelschienenleitern (2) innerhalb der Umhüllung (5) zu halten, - ein U-förmiges Wärmeableitelement (9), umfassend eine Basis (10) und zwei von der Basis (10) hervorstehenden Seitenflügeln (11),
wobei das Spannmittel (6) ein Durchführungselement (7), das sich längs des Wärmeableitelements (9) und der Umhüllung (5) erstreckt, und ein Endelement (8), das an einem Ende des Durchführungselements (7) angebracht ist, um das Wärmeableitelement (9) an die Umhüllung (5) zu befestigen, umfasst,
**dadurch gekennzeichnet, dass sie Folgendes umfasst:**
- einen Abstandhalter (16), der innerhalb der Umhüllung (5) angeordnet ist, um einen oberen Hohlraum (5b) und einen unteren Hohlraum (5c) der Umhüllung (5) zu definieren,
**sowie dadurch, dass**
- das Wärmeableitelement (9) außerhalb der Umhüllung (5) durch das Spannmittel (6) so befestigt ist, dass die Basis (10) die Umhüllung (5) berührt und die zwei Seitenflügel (11) sich von der Umhüllung (5) weg erstrecken,
- die Basis (10) des Wärmeableitelements (9) zwischen dem Endelement (8) und der Umhüllung (5) angeordnet ist,
- die Vielzahl von Sammelschienenleitern (2) eine Vielzahl von im oberen Hohlraum (5b) untergebrachten ersten Leitern (3) und eine Vielzahl von im unteren Hohlraum (5c) untergebrachten zweiten Leitern (4) umfasst,
- das Durchführungselement (7) sich längs des Abstandhalters (16) erstreckt.

2. Sammelschiene (1) nach Anspruch 1, wobei:
- die Umhüllung (5) eine flache Außenwand (5a) umfasst,
- die Basis (10) als flache Platte ausgebildet ist und sich an die flache Außenwand (5a) der Umhüllung (5) anlegt.

3. Sammelschiene (1) nach Anspruch 2, wobei:
- die zwei Seitenflügel (11) senkrecht zur Basis (10) stehen.

4. Sammelschiene (1) wie in irgendeinem der vorhergehenden Ansprüche beansprucht, wobei:
- das Wärmeableitelement (9) zwei Verbindungsabschnitte (13) umfasst, die ein gebogenes Profil zur Verbindung der Basis (10) mit den zwei Seitenflügeln (11) aufweisen.

5. Sammelschiene (1) wie in irgendeinem der vorhergehenden Ansprüche beansprucht, wobei:
- das Wärmeableitelement (9) eine Vielzahl von Zwischenflügeln (15) umfasst, die von der Basis (10) weg von der Umhüllung (5) hervorstehen und über der Basis (10) zwischen den zwei Seitenflügeln (11) angeordnet sind.

6. Sammelschiene (1) wie in irgendeinem der vorhergehenden Ansprüche beansprucht, wobei:
- die Basis (10) eine durchgehende Bohrung (12) aufweist, die zur Aufnahme des Durchführungselements (7) konfiguriert ist.

7. Sammelschiene (1) wie in irgendeinem der vorhergehenden Ansprüche beansprucht, umfassend:
- zwei Wärmeableitelemente (9), die jeweils an zwei gegenüberliegenden Seiten (5d) der Umhüllung (5) angeordnet sind.

8. Sammelschiene (1) wie in irgendeinem der vorhergehenden Ansprüche beansprucht, wobei:
- die Umhüllung (5) sich im Wesentlichen in einer Längsrichtung (X) zu einem voreingestellten Längenwert hin erstreckt,
- jedes Wärmeableitelement (9) sich in Längsrichtung zu dem voreingestellten Längenwert der Umhüllung (5) hin erstreckt,
- die Sammelschiene eine Vielzahl von Spannmitteln (6) umfasst, die über der Umhüllung (5) entlang der Längsrichtung (X) angeordnet sind.

## Revendications

1. Barre omnibus (1) comprenant :
- une pluralité de conducteurs (2) de barre omnibus ;
- un boîtier extérieur (5) contenant ladite pluralité de conducteurs (2) de barre omnibus,
- des moyens de serrage (6) s'étendant à travers ledit boîtier (5) pour retenir ladite pluralité de conducteurs (2) de barre omnibus à l'intérieur dudit boîtier (5), - un élément de dissipation thermique en forme de U (9), comprenant une base (10) et deux ailes latérales (11) se projetant à partir de ladite base (10),
dans laquelle lesdits moyens de serrage (6) comprennent un élément traversant (7), s'étendant à travers ledit élément de dissipation thermique (9) et ledit boîtier (5), et un élément d'extrémité (8) fixé à une extrémité dudit élément traversant (7) pour fixer ledit élément de dissipation thermique (9) audit boîtier (5),
**caractérisée en ce qu'elle comprend :**
- un élément d'espacement (16) situé à l'intérieur dudit boîtier (5) de façon à définir une cavité supérieure (5b) et une cavité inférieure (5c) dudit boîtier (5),
**et en ce que**
- ledit élément de dissipation thermique (9) est fixé à l'extérieur dudit boîtier (5) par lesdits moyens de serrage (6) de sorte que ladite base (10) soit en contact avec ledit boîtier (5) et que lesdites deux ailes latérales (11) s'étendent à distance dudit boîtier (5),
- ladite base (10) dudit élément de dissipation thermique (9) est située entre ledit élément d'extrémité (8) et ledit boîtier (5),
- ladite pluralité de connecteurs (2) de barre omnibus comprend une pluralité de premiers conducteurs (3) logés dans ladite cavité supérieure (5b) et une pluralité de seconds conducteurs (4) logés dans ladite cavité inférieure (5c),
- ledit élément traversant (7) s'étend à travers ledit élément d'espacement (16).

2. Barre omnibus (1) selon la revendication 1, dans laquelle :
- ledit boîtier (5) comprend une paroi extérieure plate (5a),
- ladite base (10) présente une forme de plaque plate et adhère à ladite paroi extérieure plate (5a) dudit boîtier (5).

3. Barre omnibus (1) selon la revendication 2, dans laquelle :
- lesdites deux ailes latérales (11) sont orthogonales à la base (10).

4. Barre omnibus (1) selon l'une quelconque des revendications précédentes, dans laquelle :
- ledit élément de dissipation thermique (9) comprend deux parties de connexion (13) présentant un profil courbe, destinées à connecter ladite base (10) auxdites deux ailes latérales (11).

5. Barre omnibus (1) selon l'une quelconque des revendications précédentes, dans laquelle :
- ledit élément de dissipation thermique (9) comprend une pluralité d'ailes intermédiaires (15) se projetant à partir de ladite base (10) à distance dudit boîtier (5) et disposées pardessus ladite base (10) entre lesdites deux ailes latérales (11).

6. Barre omnibus (1) selon l'une quelconque des revendications précédentes, dans laquelle :
- ladite base (10) comporte un trou traversant (12) conçu pour recevoir ledit élément traversant (7).

7. Barre omnibus (1) selon l'une quelconque des revendications précédentes, comprenant :
- deux éléments de dissipation thermique (9) situés respectivement sur deux côtés opposés (5d) dudit boîtier (5).

8. Barre omnibus (1) selon l'une quelconque des revendications précédentes, dans laquelle :
- ledit boîtier (5) s'étend principalement dans une direction longitudinale (X) suivant une valeur de longueur prédéfinie,
- chaque élément de dissipation thermique (9) s'étend longitudinalement suivant ladite valeur de longueur prédéfinie dudit boîtier (5),
- ladite barre omnibus comprend une pluralité de moyens de serrage (6) disposés pardessus ledit boîtier (5) dans ladite direction longitudinale (X).
